Europäisches Patentamt

European Patent Office

Office européen des brevets

(19)

(11) Veröffentlichungsnummer: **0 221 936**
**B1**

(12) **EUROPÄISCHE PATENTSCHRIFT**

(45) Veröffentlichungstag der Patentschrift: 24.10.90

(21) Anmeldenummer: **86902818.3**

(22) Anmeldetag: **17.04.86**

(86) Internationale Anmeldenummer:
**PCT/EP86/00223**

(87) Internationale Veröffentlichungsnummer:
**WO 86/06200 23.10.86 Gazette 86/23**

(51) Int. Cl.⁵: **G 11 B 21/10,** G 11 B 7/095 //
**G11B7/00**

(54) **AUTOMATISCHES KORREKTURSYSTEM FÜR DEN SERVOKREIS EINES GERÄTES MIT OPTISCHER ABTASTUNG EINES ROTIERENDEN INFORMATIONSTRÄGERS.**

(30) Priorität: **18.04.85 DE 3514035**

(43) Veröffentlichungstag der Anmeldung:
**20.05.87 Patentblatt 87/21**

(45) Bekanntmachung des Hinweises auf die
Patenterteilung:
**24.10.90 Patentblatt 90/43**

(84) Benannte Vertragsstaaten:
**AT BE CH DE FR GB IT LI LU NL SE**

(56) Entgegenhaltungen:
EP-A-0 139 332
GB-A-2 060 207
GB-A-2 060 217
US-A-4 488 184
US-A-4 488 278

Patents Abstracts of Japan, Band 9, NR. 68
(P-344)(1791) 28. März 1985 & JP-A-59201274

Patents Abstracts of Japan, Band 9, Nr. 122
(P-359)(1845) 28. Mai 1985 & JP-A-607658

(73) Patentinhaber: **Deutsche Thomson-Brandt
GmbH
Hermann-Schwer-Strasse 3 Postfach 1307
D-7730 Villingen-Schwenningen (DE)**

(72) Erfinder: **BAAS, Dieter
Sofienstrasse 10
D-7640 Kehl (DE)**
Erfinder: **NUTZ, Werner
Mannheimerstrasse 27
D-7730 Villingen-Schwenningen (DE)**

(56) Entgegenhaltungen:
Patents Abstracts of Japan, Band 8, Nr. 137,
(P-282)(1574) 26. Juni 1984 & JP-A-5936385

Patents Abstracts of Japan, Band 9, Nr. 167,
(P-372)(1890) 12. Juli 1985 & JP-A-6043270

Patents Abstracts of Japan, Band 9, Nr. 24,
(P-331)(1474) 31. Januar 1985 & JP-A-59167879

Patents Abstracts of Japan, Band 8, Nr. 245,
(P-312)(1682) 10. November 1984 & JP-A-
59117762

**Beschreibung**

Die Erfindung betrifft ein automatisches Korrektursystem gemäß dem Oberbegriff des ersten Anspruchs.

Die Abtastung von rotierenden Informationsträgern durch optische Abtaster kann auf verschiedene Weise gestört werden. CD-Spieler beispielsweise reagieren auf äußere Stöße ähnlich wie auf Kratzer oder ähnliche Schäden auf der abzutastenden Platte. Dadurch kann das Abtastsystem um mindestens eine Spur hinter bzw. vor die störbehaftete Spur geworfen werden. Im schlimmsten Fall tritt sogar der Verlust des Fokuspunktes auf. Nach dem Stand der Technik, der nachfolgend im Einzelnen genannt wird, wird bei Zusammenbruch des vorhandenen Servosystems dieser Zustand detektiert und eine entsprechende Neuaktivierung eingeleitet. Während dieser Zeit werden die Signal-Daten stummgesteuert (Mute), um Störgeräusche zu vermeiden.

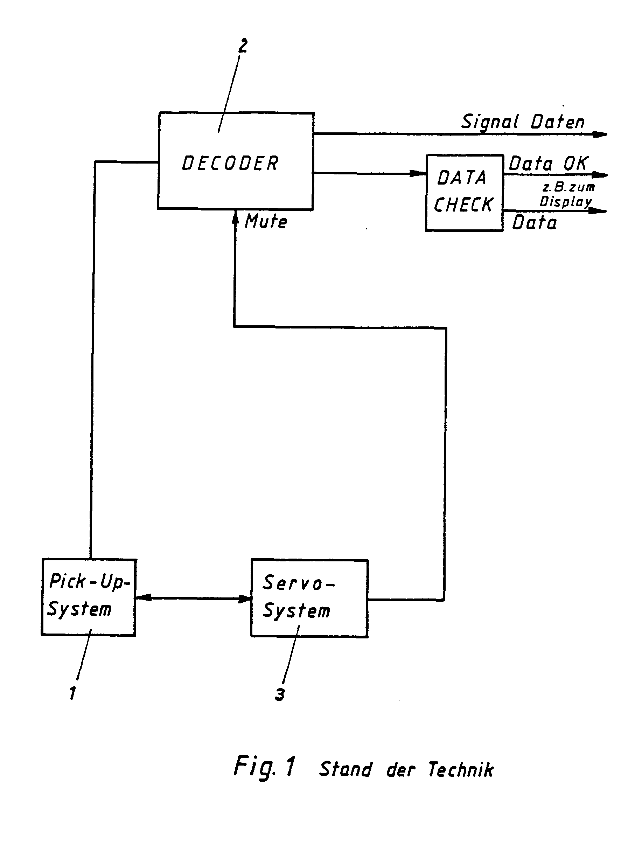

Nach der Wiederstabilisierung des Regelkreises wird die Stummsteuerung wieder aufgehoben. In Figur 1 wird eine derartige Schaltung als prinzipielles Blockschaltbild gezeigt. Dabei ist von Nachteil, daß im Störfall der momentane oder letzte gültige Abtastpunkt datenmäßig verloren geht und nach Ablauf der Störphase oder Ende der Störeinwirkung an irgendeinem zufälligen Abtastpunkt fortgefahren wird. Das bewirkt, daß nicht nur Unterbrechungen durch das Stummschalten hörbar sind, sondern daß regelrechte Informations-Versätze, bedingt durch den zufälligen Aufsetzpunkt, akustisch sehr störend wahrgenommen werden.

Aus der GB—A—2 060 207 (entspr. DE—OS 30 38 397 A1) ist ein Bildplattenspieler bekannt, bei dem ein Abtaststift die Rillen einer Bildplatte abtastet, die acht Halbbilder pro Sekunde enthält. Die Bildplatte ist daher durch die Halbbilder in acht Sektoren unterteilt, die stets in derselben periodischen Reihenfolge wiederkehren, selbst wenn der Abtaststift z.B. infolge eines Stoßes über mehrere Rillen springt. Jedem Halbbild ist als Adresse eine Halbbildnummer zugeordnet, die im Spielbetrieb in einem Speicher gespeichert und ständig erhöht wird, damit ein sequentieller Adressenvergleich durchgeführt werden kann.

In der EP—A 139 332 wird ebenfalls ein Korrektursystem beschrieben, das mittels eines Spurverlustdetektors lesbare bzw. nicht lesbare Daten an zeigt. Bei nicht lesbaren Daten wird gewartet, bis wieder eine lesbare Adresse gefunden wird, aus dem Timedecode der letzten gültigen Adresse und der neuen Adresse wird ein Korrektursignal so ermittelt, daß der Abtaster an einer Stelle weiterfährt, auf der er stünde, wenn die Störung nicht gewesen wäre. Es wird also ebenfalls ein sequentieller Adressenvergleich durchgeführt.

Die JP—A—59 167 879 zeigt schließlich einen Detektor für lesbare und nicht lesbare Adressen. Ferner zeigt es einen Spursprungdetektor, der anzeigt, wenn die Spurdifferenz zu groß wird. Im Falle von nicht lesbaren Zeichen wird von einem Register die vorhergehende Adresse gehalten und ein vom Signal "nicht lesbares Zeichen" betätigter Zähler erzeugt ein Korrektursignal.

Der vorliegenden Erfindung lag die Aufgabe zugrunde, den Verlust des letzten gültigen Abtastpunktes im Störfall durch ein sich selbst kontrollierendes Korrektursystem als Verbesserung der genannten Servosysteme zu machen, daß Störstellen akustisch weitgehend nicht wahrgenommen werden können.

Für Verfahren nach dem Oberbegriff der Ansprüche 1 und 2, wird diese Aufgabe erfindungsgemäß nach deren Kennzeichen gelöst.

Weitere Einzelheiten und Ausgestaltungen sind den weiteren Ansprüchen und der nachfolgenden Beschreibung von Ausführungsbeispielen zu entnehmen.

Nach der Erfindung wird der letzte gültige Abtastpunkt vor Beginn einer Störphase durch fortlaufende Datenspeicherung der abgetasteten Informationen festgehalten, die durch sequentiellen Adressenvergleich detektiert wird. Daraufhin wird ein entsprechendes Korrektursignal erzeugt, daß eine automatische Korrektur auf den letzten gültigen Abtastpunkt ermöglicht. So werden vorteilhafterweise bei sehr flinker Arbeitsweise Informationslücken, -sprünge und -versätze, die störend hörbar wären, weitgehend vermieden.

Nachfolgend werden zwei Ausführungsbeispiele an hand der Zeichnung beschrieben. Diese zeigt in

Figur 1 ein Blockschaltbild eines bekannten Servosystems, wie eingangs erwähnt;

Figur 2 ein Blockschaltbild eines Korrektursystems, das Fehler durch äußere Stoßeinwirkung korrigieren kann;

Figur 3 ein Blockschaltbild eines Korrektursystems ähnlich der Figur 2, erweitert durch eine Kontroll-Schaltung derart, daß alle Arten von Störungen in kurzer Zeit korrigiert werden können.

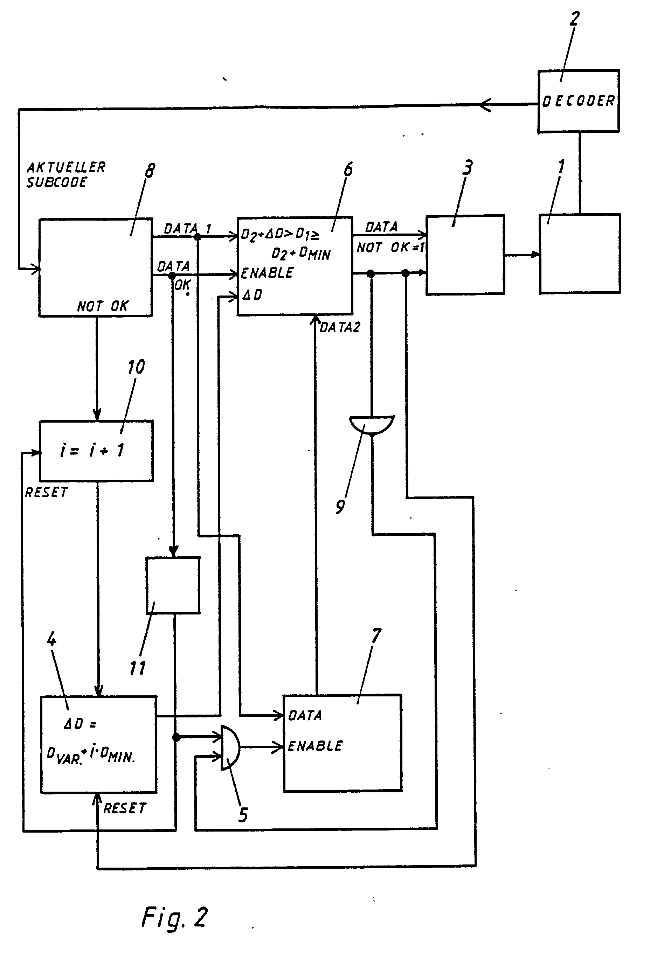

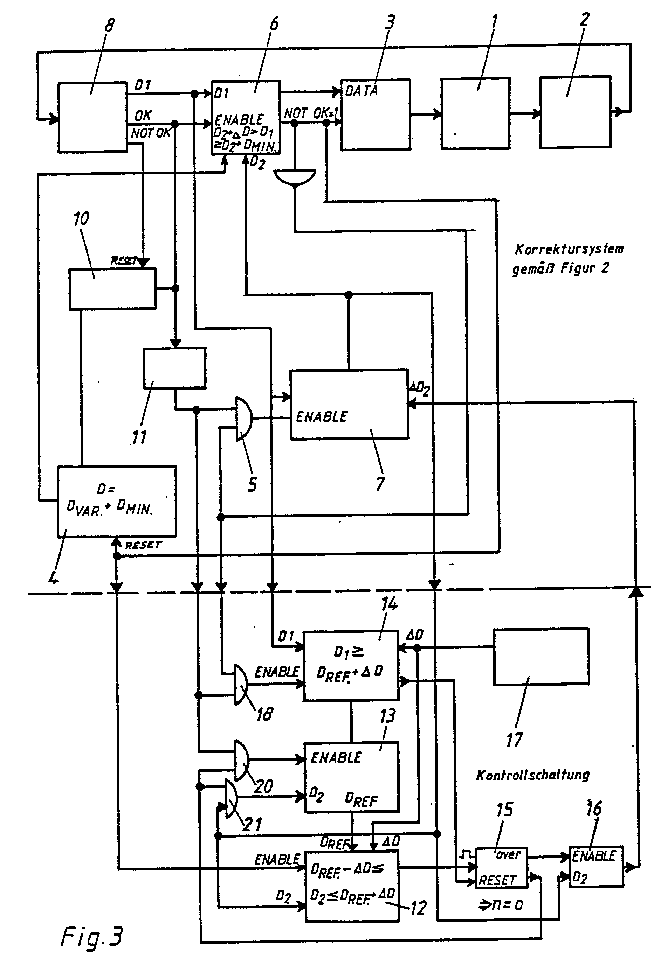

Bei dem Korrektursystem, das Figur 2 als Blockschaltbild zeigt, geschieht die Auslösung einer Korrektur durch sequentiellen Adressenvergleich, d.h. wenn die Sequenz der ausgelesenen Adressen unterbrochen wird, liegt eine Störung vor. Wesentlich für den Funktionsablauf sind ein Vergleicher 6 und eine Latch-Schaltung 7. Der Vergleicher 6 vergleicht jeweils neu eingelesene Daten mit vorhergehenden Informationen, die in der Latch-Schaltung 7 zwischengespeichert sind. Liegt der Vergleich außerhalb eines Meßfensters $\Delta D$, das im Block 4 vorgegeben wird ($\Delta D = D_{var} + i \cdot D_{min.}$), so wird aus dem Vergleicher 6 ein Korrektursignal an das Servosystem 3 ausgegeben. Dieses Signal ist so gerichtet, daß das Abtastsystem an den alten Adresswert $D_2 = Data 2$ positioniert wird. Mit der Ausgabe eines "not-ok"-Signals wird über die Tore 5 und 9 die Latch-Schaltung 7 inaktiviert. Dadurch können keine neuen Daten in die Latch-Schaltung 7 eingelesen werden. Damit bleibt die Referenz $D_{ref.}$ erhalten. Dieser Zustand wird solange beibehalten, bis der richtige Abtastpunkt gefunden ist und somit der Vergleicher 6 das "not-ok"-Signal zurücksetzt. Mit Hilfe von Block 4 kann ein variables Meßfenster

$D_{var.}$ zwischen Data 1 und Data 2 vorgegeben werden. Innerhalb des Meßfensters $\Delta D$ wird kein Korrektursignal ausgegeben.

Da es vorkommen kann, daß einzelne Dateninformationen (Adressen) zerstört sind, beispielsweise durch Plattenfehler wie Kratzer, also nicht durch Einwirkung von außen und auch obwohl keine Störung des Abtasters vorliegt, muß das Meßfenster $\Delta D$ mit jeder ungültigen Adresse um die minimale, durch das verwendete Codierungssystem der Aufnahme vorgegebene Adressbreite $D_{min.}$ erhöht werden. Wäre diese Anpassung des Meßfensters an die hintereinander folgenden, ungültigen Adressdaten nicht gegeben, so könnte das, je nach Größe des vorliegenden Wertes von $D_{var.}$, zu einer unerwünschten Aktivierung des Korrektursystems führen. Die Folge davon wäre, daß ständig Korrektursignale auf das Servosystem einwirken, die ein kontinuierliches Auslesen (Abspielen) des Abtasters verhindern würden.

Diese erforderliche Anpassung des Meßfensters wird von den Blöcken 4 und 10 durchgeführt. Im Block 10 werden die hintereinander folgenden, ungültigen Daten gezählt und an den Block 4 zur Veränderung von $\Delta D$ weitergegeben. In dem Block 4 wird das Meßfenster $\Delta D$ wie folgt gebildet:

$$\Delta D = D_{var.} + i \cdot D_{min.} \qquad \text{mit } i \geq 1,$$

wobei

$D_{var}$ = gegebenes Meßfenster

$D_{min}$ = minimale Adresseinheit (systemspezifisch)

i = Anzahl der hintereinander folgenden, ungültigen Adresseinheiten

$\Delta D$ = Meßfenster, innerhalb desselben ist der Vergleich positiv.

Mit jeder gültigen Adresseinheit wird mit Hilfe des "Data-ok"-Signals aus dem Data-Check-Block 8 über den Verzögerungsblock 11 "i" auf Eins zurückgesetzt. Dadurch wird das Meßfenster $\Delta D$ ständig neu auf dem vorgegebenen Grundwert $D_{var.} + D_{min.}$ gehalten.

Im Korrekturfall wird das Meßfensters $\Delta D$ über die "not-ok"-Leitung aus dem Vergleicher 6 auf Null gesetzt. Dadurch wird ein genauer Vergleich mit dem alten Wert D2, das ist die letzte ausgelesene und gespeicherte Adresse vor der Störung, vorgenommen und das entsprechende Korrektursignal für das Servosystem erzeugt und ihm zugeleitet.

Figur 3 zeigt die der Figur 2 entsprechende Block-Schaltung oberhalb der gestrichelten horizontalen Linie. Unterhalb ist ein Blockschaltbild einer Kontrollschaltung eingetragen, die mit der Korrekturschaltung zusammenarbeitet. Die Schaltungen sind so miteinander verbunden, daß sich ihre Funktionen überlagern. Diese automatische Kontroll- und Korrekturschaltung nach Figur 3 ist in der Lage alle Arten von Abspielstörungen so zu korrigieren, daß keine wesentliche akustische Beeinträchtigung die Wiedergabe stört, auch wenn Störstellen bei der Abtastung auftreten.

Im normalen ungestörten Wiedergabebetrieb befindet sich die Kontrollschaltung weitgehend im Ruhezustand. Lediglich der Speicher 13, eine Latch-Schaltung, und der Vergleicher 14 sind aktiviert. Der Speicher 13 wird über das Tor 20 mit jeder neuen Dateninformation (=Adresse) aktiviert, um die aktuellen Adressen $D_2$=Data 2 über das Tor 21 zu übernehmen. Der Zähler 15 befindet sich zu diesem Zeitpunkt in der Nullstellung. In den Vergleicher 14 werden ebenfalls die laufenden aktuellen Adressdaten (Data 1=D1) übernommen. In diesem ungestörten Abspielbetrieb sind die Adressinformationen D1 und D2 gleich. In diesem Mode hat der Vergleicher 14 keine praktische Bedeutung. Der Vergleicher 14 wird zwar mit jeder neu eingelesenen Information ein "ok"-Signal an den Zähler 15 ausgeben, jedoch nur wenn die Vorgabe-Daten aus Vorgabe-Block 17 gleich Null sind ($\Delta Data_{var.}$=0). Das ist aber ohne Bedeutung, da sich der Zähler 15 bereits in der Reset-Stellung befindet. Die Vorgabe-Daten aus dem Vorgabe-Block 17 bestimmt die Breite des Meßfensters $\Delta D$, innerhalb diesen die Datenvergleiche aus den Vergleichern 12 und 14 positiv gewertet werden.

Wenn nun eine Störung auftritt, gibt die Vergleicherstufe 6 ein "not-ok"-Signal aus. Dieses Signal sperrt über das Tor 18 den Vergleicher 14, so daß zunächst kein Vergleich vorgenommen wird. Zu diesem Zeitpunkt wird jedoch der Vergleicher 12 aktiviert. Dieser vergleicht die Daten aus der Latch-Schaltung 13 mit den letzten gültigen Adressendaten D2. Da $D_{ref.}$ und $D_2$ zu diesem Zeitpunkt gleich sind, wird vom Vergleicher 14 ein "ok"-Signal an den Zähler 15 ausgegeben. Dieser zählt nun um Eins hoch und sperrt dadurch die Tore 20 und 21. Eine weitere Datenübertragung in der Latch-Schaltung 13 kann somit nicht mehr stattfinden. Das Korrektursystem bewirkt nunmehr, daß der Abtaster 1 auf den zuletzt gültigen Abtastwert Data 2=D2 aus der Latch-Schaltung 7 positioniert wird. Ist die Störung von einem Plattenfehler ausgelöst, so wird der Abtaster 1 sofort wieder seinen Abtastpunkt an der Störstelle verlieren. Die Folge davon ist, daß der Vergleicher 6 sofort wieder den Vergleicher 12 aktiviert und daß dieser einen weiteren Zählimpuls an den Zähler 15 ausgibt. Das wiederholt sich so lange, bis der Zähler 15 überläuft und den Baustein 16 aktiviert. Dieser addiert daraufhin zum letzten gültigen Abtastwert $D_2$ ein wählbares $\Delta D_2$ hinzu und gibt das Ergebnis an Latch-Schaltung 7 als neue Referenz aus. Der Vergleicher 6 bewirkt als Folge, daß der Abtaster 1 um dieses $\Delta D_2$ hinter die Störstelle, also über sie hinweg, bewegt wird. Sobald dieser Punkt gebunden ist, wird das "not-ok"-Signal den Vergleicher 12 inaktivieren und die Schaltung befindet sich wieder in der Ausgangslage. Der Vergleicher 14 ist in diesem Fall ohne Einfluß geblieben. Er dient dazu, um im Falle einer einmaligen Korrektur den Zähler 15 wieder zurückzusetzen.

Wenn die Abtastung nach einer einmaligen Korrektur weiterläuft, dann wird die aktuelle Adressinformation $D_1$ größer als der letzte Referenzwert $D_{ref.}$ plus ein vorgegebenes Fenster $\Delta D$,

so daß der Vergleicher 14 ein "ok"-Signal an den Zähler 15 abgibt und auf diese Weise die ganze Schaltung wieder in die Ausgangslage versetzt.

## Patentansprüche

1. Automatisches Korrekturverfahren für den Servokreis eines Gerätes mit optischem Abtaster für rotierende Informationsträger, wobei der Servokreis so beschaffen ist, daß Störungen des Abtastsystems bzgl. Fokus und/oder Spur in einem Servosystem detektiert werden und gegebenenfalls ein Mute-Signal an den am Abtastsystem angeschlossenen Decoder abgibt und so dessen Ausgänge stumm steuert, wobei ein sequentieller Adressenvergleich das Auslösekriterium für die Abgabe eines Korrektursignals im Störfall liefert, indem ein Vergleicher (6) jeweils neu ausgelesene Adressen (DATA 1) mit vorhergehenden Adressen (DATA 2) vergleicht, die in einer Speicherschaltung (7) zwischengespeichert sind und wobei jeweils die zuletzt gültige Adresse in der Speicher-Schaltung (7) gespeichert wird und mit einer Datenprüfschaltung (8), die für jede Adresseneinheit ein Gültigkeitssignal oder Ungültigkeitssignal liefert, dadurch gekennzeichnet, daß bei gültigen Daten ein Rücksprung des die Daten abtastenden Lichtstrahls auf die Stelle der zuletzt gültigen Adresse (DATA 2) erfolgt, wenn die neu ausgelesene Adresse (DATA 1) bezüglich der zuletzt gültigen Adresse (DATA 2) außerhalb eines vorgebbaren Meßfensters ΔD liegt, daß bei ungültigen Daten kein Rücksprung des die Daten abtastenden Lichtstrahls auf die letzte richtig gelesene Adresse erfolgt, sondern die aufeinanderfolgenden Ungültigkeitssignale gezählt werden und nach Maßgabe des Zählergebnisses das Meßfenster ΔD vergrößert wird, und daß bei der ersten wieder gültigen Adresse der vom Gültigkeitssignal aktivierte sequentielle Adressenvergleich fortsetzt, die Speicherschaltung (7) auf die neue Adresse gesetzt und das Meßfenster auf einen Ausgangswert gesetzt wird.

2. Automatisches Korrekturverfahren für den Servokreis eines Gerätes mit optischem Abtaster für rotierende Informationsträger, wobei der Servokreis so beschaffen ist, daß Störungen des Abtastsystems bzgl. Fokus und/oder Spur in einem Servosystem detektiert werden und gegebenenfalls ein Mute-Signal an den am Abtastsystem angeschlossenen Decoder abgibt und so dessen ausgänge stumm steuert, wobei ein sequentieller Adressenvergleich das Auslösekriterium für die Abgabe eines Korrektursignals im Störfall liefert, indem ein Vergleicher (8) jeweils neu ausgelesene Adressen mit vorhergehenden Adressen vergleicht, die in einer Speicher-Schaltung (7) zwischengespeichert sind, und wobei jeweils die zuletzt gültige Adresse in der Speicher-Schaltung (7) gespeichert wird und mit einer Datenprüf-Schaltung (8), die für jede Adresseneinheit ein Gültigkeitssignal oder Ungültigkeitssignal liefert, dadurch gekennzeichnet, daß ein Rücksprung des die Daten abtastenden Lichtstrahls auf die zuletzt gültige Adresse erfolgt, wenn die neu ausgelesene Adresse (D1) bezüglich der zuletzt gültigen Adresse (D2) außerhalb eines vorgebbaren Meßfensters ΔD liegt, daß bei ungültigen Daten die Anzahl der Rücksprünge auf die zuletzt gültige Adresse (D2) gezählt wird und daß, wenn die Anzahl der gezählten Rücksprünge einen vorgebbaren Wert erreicht, im Speicher zu der zuletzt gültigen Adresse ein vorgebbarer Adressenabstand (ΔD2) addiert und der Lichtstrahl auf die so bereichnete Adresse positioniert wird.

3. Automatisches Korrekturverfahren nach Anspruch 1, dadurch gekennzeichnet, daß die Rückstellung des Abtastsystems (1) an die letzte gültige Adresseinheit durch Abgabe eines "not-ok"-Signals aus dem Vergleicher (6) eingeleitet wird, dieses aber über die Tore (5) und (9) die Speicher-Schaltung (7) inaktiviert, wodurch keine neuen Daten in die Speicher-Schaltung (7) eingelesen werden können und ein variables Meßfenster ΔD aus Vorgabe-Block (4) auf Null setzt, durch das ein genauer Vergleich im Vergleicher (6) mit den in der Speicher-Schaltung (7) gespeicherten Adressinformationen gewährleistet ist, und daß während des Abspielvorgangs ein variables Meßfenster ΔD im Vorgabe-Block (4) nach folgender Formel gebildet wird

$$\Delta D = D_{var.} + i \cdot D_{min.}, \qquad \text{mit } i \geq 1;$$

wobei

$D_{var.}$ = vorgegebenes Meßfenster;

$D_{min.}$ = minimale Adresseinheit (systemspezifisch);

$i$ = Anzahl der hintereinanderfolgenden Ungültigkeitssignale;

$\Delta D$ = Meßfenster, innerhalb desselben ist der Vergleich positiv;

und welches Meßfenster sich ständig der Störart und -dauer automatisch anpaßt, indem die hintereinanderfolgenden Ungültigkeitssignale gazählt werden, und daß Gültigkeitssignale die Rücksetzung auf "i=1" bewirken.

4. Schaltung zur Durchführung des Verfahrens nach Anspruch 2, gekennzeichnet durch

a) einen Speicher (13) für eine Adresse $D_{ref.}$ und einen Vergleicher (14), die bei ungestörtem Normalbetrieb aktiviert sind, wobei der Speicher (13) über ein Tor (20) mit jeder neuen Dateninformation aktiviert wird, um die zuletzt gültige Adresse D2 über ein Tor (21) zu übernehmen;

b) einen Zähler (15), der sich im Normalbetrieb in der Nullstellung befindet;

c) ein ENABLE-Eingang des Vergleichers (14), der die Bestimmung von $D1 \geq D_{ref.} + \Delta D$ durchführt und die Eingänge für die neu gelesenen Adressdaten D1 und ΔD1 aufweist.

d) einem weiteren Vergleicher (12) für die Bestimmung von

$$D_{ref} - \Delta D \leq D2 \leq D_{ref.} + \Delta D1;$$

e) eine Schaltung (16), die mit dem Zähler (15) zusammenarbeitet und ein Signal an den Speicher (7) dann abigbt, wenn er vom überlaufenden Zähler (15) aktiviert wurde und D2 um ΔD2 erhöht.

## Revendications

1. Procédé pour la correction automatique du circuit d'asservissement d'un appareil comprenant un lecteur optique pour des supports d'information en rotation, le circuit d'asservissement étant conçu de manière que des incidents survenant au niveau du système de lecture concernant la focalisation et/ou le suivi de piste sont détectés dans un système d'asservissement, qui délivre, le cas échéant, un signal de réglage silencieux (mute) au décodeur relié au système de lecture et applique ainsi un réglage silencieux à ses sorties, une comparaison séquentielle des adresses fournissant un critère de déclenchement pour la délivrance d'un signal correcteur en cas d'incident en ce sens qu'un comparateur (6) compare de nouvelles adresses lues (DATA 1) avec des adresses précédentes (DATA 2) qui sont mises en mémoire temporairement dans un registre (7), et que la dernière adresse valable est mise en mémoire dans le registre (7) et comparée dans un circuit de contrôle des données (8) qui délivre un signal de validité ou un signal de non validité pour chaque unité d'adresse, caractérisé en ce que, en cas de données valables, le faisceau lumineux qui effectue la lecture des données, fait un saut en arrière jusqu'à l'endroit de la dernière adresse valable (DATA 2) lorsque la nouvelle adresse lue (DATA 1) relative à la dernière adresse valable (DATA 2) se situe en-dehors d'une fenêtre de mesure prédéfinie ΔD, que, en cas de données non valables, le faisceau lumineux effectuant la lecture des données ne fait aucun saut en arrière jusqu'à la dernière adresse correctement lue, mais qu'on compte les signaux de non validité successifs et que la fenêtre de mesure ΔD est agrandie en fonction du résultat du compteur, et qu'à la première nouvelle adresse valable la comparaison séquentielle des adresses activée par le signal de validité se poursuit, le registre est positionné sur la nouvelle adresse et la fenêtre de mesure est positionnée à une valeur de sortie.

2. Procédé pour la correction automatique du circuit d'asservissement d'un appareil comprenant un lecteur optique pour des supports d'information en rotation, le circuit d'asservissement étant conçu de telle manière qu'un système d'asservissement détecte des incidents du système de lecteur concernant le foyer et/ou la piste et délivre, le cas échéant, un signal de réglage silencieux (mute) au décodeur relié au système de lecture et applique ainsi un réglage silencieux à ses sorties, une comparaison séquentielle des adresses fournissant le critère de déclenchement pour la délivrance d'un signal correcteur en cas d'incident en ce sens qu'un comparateur (8) compare de nouvelles adresses lues avec des adresses précédentes mises en mémoire temporairement dans un registre (7) et avec un circuit de contrôle des données (8) qui délivre un signal de validité ou un signal de non validité pour chaque unité d'adresse, caractérisé en ce que le faisceau lumineux détectant les données, effectue un saut en arrière jusqu'à la dernière adresse valable lorsque la nouvelle adresse lue (D1) relative à la dernière adresse valable (D2) se situe en-dehors d'une fenêtre de mesure prédéfinie ΔD, que le nombre de sauts en arrière effectués jusqu'à la dernière adresse valable (D2), en cas de données non valables, est compté et qu'un écart d'adresse prédéfini (ΔD2) est ajouté à la dernière adresse valable dans la mémoire lorsque le nombre de sauts en arrière compté atteint une valeur prédéfinie, le faisceau lumineux étant positionné sur l'adresse ainsi calculée.

3. Procédé de correction automatique selon la revendication 1, caractérisé en ce que le retour en arrière du système de lecture (1) jusqu'à la dernière unité d'adresse valable est initialisé par le comparateur (6) qui délivre un signal "not-ok", mais celui-ci désactive le registre (7) par les portes (5) et (9), ce qui interdit toute mise en mémoire de nouvelles données dans le registre (7), et remet à zéro une fenêtre de mesure variable ΔD du bloc (4), qui permet d'effectuer une comparaison exacte dans le comparateur (6) avec les informations d'adresse mises en mémoire dans le registre (7), et qu'une fenêtre de mesure variable ΔD est fomée dans le bloc (4) pendant la reproduction selon la formule suivante:

$$\Delta D = D_{var} + i \cdot D_{min} \qquad \text{avec } i \geq 1;$$

où

$D_{var}$=fenêtre de mesure prédéfinie;

$D_{min}$=unité d'adresse minimale (spécifique du système);

i=nombre de signaux sucessifs non valables;

ΔD=fenêtre de mesure dans laquelle la comparaison est positive

et que cette fenêtre s'adapte automatiquement et constamment à la nature et à la durée de l'incident en comptant les signaux successifs non valables et que des signaux valables provoquent la remise à "i=1".

4. Circuit pour la mise en oeuvre du procédé selon la revendication 2, caractérisé par

a) une mémoire (13) pour une adresse $D_{ref}$ et un comparateur (14) qui sont à l'état actif en cas de fonctionnement normal sans incident, la mémoire (13) étant activée à chaque nouvelle information par la porte (20) pour accepter la dernière adresse valable D2 par une porte (21);

b) un compteur (15) se trouvant dans la position zéro en cas de fonctionnement normal;

c) une entrée ENABLE du comparateur (14) qui se charge de déterminer $D1 \leq D_{ref} + \Delta D$ et qui comprend les entrées pour les nouvelles données d'adresse D1 et ΔD1 mises en mémoire;

d) un autre comparateur (12) pour déterminer

$$D_{ref} \cdot \Delta D1 \leq D2 \leq D_{ref} + \Delta D1;$$

e) un circuit (16) coopérant avec le compteur (15) et délivrant un signal au compteur (7) lorsqu'il est activé par le dépassement de capacité du compteur (15), et augmentent D2 de ΔD2.

**Claims**

1. Automatic correction method for the servo-circuit of a device with optical scanner for rotating information carriers, in which the servo-circuit is so designed that interference to the scanning system or focus and/or track is detected in a servo system and it emits where necessary a mute signal to the decoder connected to the scanning system and thus ensures mute control of the outputs of the latter, in which a sequential address comparison supplies the triggering criterion for the emitting of a correction signal in the event of a fault, in that a comparator (6) compares any newly read addresses (DATA 1) with previous addresses (DATA 2) stored temporarily in a memory circuit (7), the last valid address being stored in the memory circuit (7), and with a data checking circuit (8) which supplies a validity signal or invalidity signal for each address unit, characterised in that in the case of valid data the return of the light beam scanning the data to the position of the last valid address (DATA 2) occurs if the newly read address (DATA 1) lies outside a pre-set measurement window ΔD with respect to the last valid address (DATA 2), that in the case of invalid data no return of the light beam scanning the data to the last correctly read address occurs, but instead the successive invalidity signals are counted and the measurement window ΔD is increased in accordance with the measurement result, and that at the first newly valid address the sequential address comparison activated by the validity signal is continued, the memory circuit (7) is set to the new address and the measurement window is set to an output value.

2. Automatic correction method for the servo-circuit of a device with optical scanner for rotating information carriers, in which the servo-circuit is so designed that interference to the scanning system or focus and/or track is detected in a servo system and it emits where necessary a mute signal to the decoder connected to the scanning system and thus ensures mute control of the outputs of the latter, in which a sequential address comparison supplies the triggering criterion for the emitting of a correction signal in the event of a fault, in that a comparator (8) compares any newly read addresses with previous addresses stored temporarily in a memory circuit (7), the last valid address being stored in the memory circuit (7), and with a data checking circuit (8) which supplies a validity signal or invalidity signal for each address unit, characterised in that the return of the light beam scanning the data to the last valid address occurs if the newly read address (D1) lies outside a preset measurement window ΔD with respect to the last valid address (D2), that in the case of invalid data the number of returns to the last valid address (D2) is counted and that, if the number of returns counted reaches a pre-set value, a pre-set address spacing (ΔD2) is added in the memory to the last valid address and the light beam is positioned on the address so calculated.

3. Automatic correction method according to claim 1, characterised in that the re-setting of the scanning system (1) to the last valid address unit is initiated by the emission of a "not ok" signal from the comparator (6), that the latter however inactivates the memory circuit (7) via the gates (5) and (9), whereby no new data can be read into the memory circuit (7), and sets a variable measurement window ΔD out of pre-set block (4) to zero, by means of which an exact comparison in the comparator (6) with the address information stored in the memory circuit (7) is ensured, and that during the playback procedure a variable measurement window ΔD is formed in pre-set block (4) according to the following formula:

$$\Delta D = D_{var.} + i \cdot D_{min.}, \qquad \text{with } i \geq 1;$$

where

$D_{var.}$ = pre-set measurement window;
$D_{min.}$ = minimum address unit (system-specific);
$i$ = number of successive invalidity signals
$\Delta D$ = measurement window within which the comparison is positive;

said measurement window undergoing continuous automatic adjustment to the type and period of interference by the counting of the successive invalidity signals, and that validity signals cause re-setting to "$i=1$".

4. Circuit for implementing the method according to claim 2, characterised by

a) a memory (13) for an address $D_{ref.}$ and a comparator (14), which are activated during interference-free normal operation, in which the memory (13) is activated via a gate (20) with each new item of data in order to take over the last valid address D2 via a gate (21);

b) a counter (15) which is in the zero position in normal operation;

c) an ENABLE input of the comparator (14), which performs the determination of $D1 \geq D_{ref.} + \Delta D$ and posseses the inputs for the newly read address data D1 and ΔD1.

d) a further comparator (12) for the determination of

$$D_{ref.} - \Delta D1 \leq D2 \leq D_{ref.} + \Delta D1;$$

e) a circuit (16) which cooperates with the counter (15) and emits a signal to the memory (7) if the latter has been activated by the overflowing counter (15) and increases D2 by ΔD2.

**2**

DECODER

Signal Daten

Mute

DATA
CHECK

Data OK

z.B.zum
Display

Data

Pick-Up-
System

Servo-
System

**1**

**3**

Fig. 1  Stand der Technik

1

Fig. 2

2

Fig.3